# EUROPÄISCHE PATENTSCHRIFT

(11) **EP 4 067 533 B1**
(45) Veröffentlichungstag und Bekanntmachung des Hinweises auf die Patenterteilung: **18.03.2026**
(21) Anmeldenummer: 21020168.7
(22) Anmeldetag: 30.03.2021
(51) Int. Cl.: C25B 1/04, C25B 15/08, F25J 1/00, F25J 1/02

(54) **VERFAHREN UND ANLAGE ZUR ELEKTROLYTISCHEN HERSTELLUNG VON FLÜSSIGWASSERSTOFF**
METHOD AND INSTALLATION FOR THE PRODUCTION OF LIQUID HYDROGEN BY MEANS OF ELECTROLYSIS
PROCÉDÉ ET INSTALLATION DE PRODUCTION ÉLECTROLYTIQUE D'HYDROGÈNE LIQUIDE

(43) Veröffentlichungstag der Anmeldung: 05.10.2022
(73) Patentinhaber: Linde GmbH, 82049 Pullach (DE)
(72) Erfinder: Peschel, Andreas, 82515 Wolfratshausen (DE); Cardella, Umberto, 80805 München (DE); Hentschel, Benjamin, 80689 München (DE)
(74) Vertreter: Fischer, Werner

(56) Entgegenhaltungen:
- CN-A- 107 779 906
- CN-A- 112 361 714
- JP-A- 2020 024 064
- US-A1- 2017 321 332

## Beschreibung

Die Erfindung betrifft ein Verfahren zur elektrolytischen Herstellung eines Flüssigwasserstoffprodukts sowie eine Anlage zu dessen Durchführung.

### Hintergrund der Erfindung

Wasserstoff kann unter Verwendung verschiedenster Verfahren gewonnen werden, beispielsweise durch Dampfreformierung von wasserstoffhaltigen organischen Verbindungen wie Methan, durch Ko-Elektrolyse von Wasser und Kohlenstoffdioxid oder durch Elektrolyse von Wasser.

Letztere kann insbesondere auf einer Verwendung von alkalischer Elektrolyse (AEL), Protonenaustauschmembranen (engl. proton exchange membrane, PEM), Anionenaustauschmembranen (engl. anion exchange membrane, AEM) oder Festoxid-Elektrolysezellen (engl. solid oxide electrolysis cell, SOEC) basieren. Ggf. können auch verschiedene dieser Technologien in Kombination bzw. parallel zueinander in einer Anlage verwendet werden.

Wasserstoff kann durch Abkühlen und anschließende Kondensation gegen ein geeignetes Kühlmedium wie Wasserstoff oder Helium verflüssigt werden. Vor der Kondensation muss der Wasserstoff vorgekühlt werden, um die Effizienz der Verflüssigung zu erhöhen. Üblicherweise wird zur Vorkühlung verdampfender Flüssigstickstoff (LIN) verwendet.

Industrielle Anlagen zur Verflüssigung von Wasserstoff sind bekannt, wobei beispielsweise auf die EP 3 163 236 A1 verwiesen wird. Hierbei wird typischerweise ein Wasserstoffgasstrom mittels einer Anzahl von geschlossenen Kühlkreisläufen, wobei diese einen Vorkühlkreislauf und Hauptkühlkreislauf umfassen, auf eine Temperatur unterhalb seines Kondensationspunktes abgekühlt, um einen flüssigen Wasserstoffstrom bereitzustellen.

Bei herkömmlichen Kühlkreisläufen wird typischerweise Stickstoff als Kühlmittel verwendet. Hierbei wird beispielsweise die Verdampfung von flüssigem Stickstoff bei etwa 78K ausgenutzt, um einen Wasserstoffstrom zunächst im Rahmen von Vorkühlkreisläufen von der Umgebungstemperatur auf etwa 80K abzukühlen. Dies wird erreicht durch Führen des Stickstoffstroms und des Wasserstoffstroms durch einen entsprechend ausgelegten Wärmetauscher. Anschließend wird der derart abgekühlte Wasserstoffstrom durch eine als Adsorbereinheit ausgebildete Reinigungseinheit zur Entfernung von Restkontaminationen geführt.

Nach dieser Reinigung erfolgt typischerweise in einer Konverter-Einrichtung, die typischerweise als ein oder mehrere mit Katalysatormaterial gefüllte Wärmetauscher oder Behälter ausgebildet ist, eine Ortho-Para-Umwandlung des Wasserstoffs.

Hieran schließt sich in der Regel im Rahmen des Hauptkühlkreislaufs eine weitere Abkühlung bis unterhalb der kritischen Temperatur des Wasserstoffs (ca. 33 K) auf ein Temperaturniveau von etwa 20-24K an.

Besonderes Augenmerk wird in jüngerer Zeit auf eine Entkopplung von Energieerzeugung und Güterproduktion von Kohlenstoffdioxid-Emissionen gelegt. In diesem Zusammenhang ist die Elektrolyse von Wasser besonders geeignet, Wasserstoff als Ersatz für klimaschädliches Erdgas sowie als Grundstoff für die chemische Industrie bereitzustellen. Insbesondere in Kombination mit erneuerbarer elektrischer Energie, beispielsweise Windkraft, Gezeitenkraft, Wellenkraft, Wasserkraft oder Solarstrom, kann die Elektrolyse weitestgehend emissionsfrei Wasserstoff zur Verfügung stellen. Dabei ist jedoch festzustellen, dass gerade die angegebenen regenerativen Energiequellen häufig starken Angebotsschwankungen unterliegen, weshalb ein Bedarf an flexibel steuerbaren Elektrolyseverfahren und -anlagen besteht.

In den Patentschriften CN107779906A, US20170321332A1, JP2020024064A und CN112361714A vorgeschlagen, das Kathodenrohgas stromab der Elektrolyse und stromauf der Verflüssigung zumindest teilweise einer Zwischenspeicherung zu unterwerfen, wodurch ein schwankendes Angebot der regenerativen Energiequellen ausgeglichen und die Flüssigwasserstofferzeugung flexibel gesteuert werden kann.

Die Aufgabe der Erfindung besteht darin, ein verbessertes Konzept zur elektrolytischen Herstellung von Wasserstoff, insbesondere zur flexibleren Steuerung von dessen Energiebedarf, bereitzustellen.

### Offenbarung der Erfindung

Diese Aufgabe wird durch Verfahren und Anlagen gemäß den jeweiligen unabhängigen Patentansprüchen gelöst, insbesondere dadurch, dass Wasserstoff stromab der Elektrolyse und stromauf der Verflüssigung zwischengespeichert wird, um die unterschiedlichen Dynamiken von Elektrolyse und Verflüssigung zu kompensieren. Vorteilhafte Ausgestaltungen sind jeweils Gegenstand der abhängigen Patentansprüche sowie der nachfolgenden Beschreibung.

Der Begriff "Flüssigwasserstoffprodukt" wird hier für flüssige Medien verwendet, die aus dem erfindungsgemäßen Verfahren bzw. einer entsprechenden Anlage ausgeführt (exportiert) werden. Diese müssen dabei nicht ausschließlich aus Wasserstoff bestehen, weisen Wasserstoff jedoch in einem Gehalt von mehr als 80%, 90%, 95% oder 99%, insbesondere auf molarer Basis, auf.

Die Begriffe "Kathodenrohgas" bzw. "Rohwasserstoff" werden dagegen für Medien des jeweils angegebenen Aggregatzustands verwendet, in denen die Gehalte an Wasserstoff geringer sind als in dem Flüssigwasserstoffprodukt. Das Flüssigwasserstoffprodukt wird durch entsprechende Aufreinigung zumindest eines Teils des Rohwasserstoffs gebildet. Rohwasserstoff enthält insbesondere beträchtliche Mengen an Sauerstoff sowie Wasser als zu entfernende Komponenten.

Im Sprachgebrauch der vorliegenden Patentanmeldung ist ein Gasgemisch reich an einer oder mehreren Komponenten, wenn es einen Anteil von über 50%, 60%, 70%, 80%, 90%, 95%, 98%, 99%, 99,9% oder 99,99% an dieser einen oder diesen mehreren Komponenten aufweist, wobei sich im Falle mehrerer Komponenten der Anteil als Summe der Einzelanteile versteht.

Dementsprechend ist ein Gemisch arm an einer oder mehreren Komponenten, wenn es nicht reich an dieser oder diesen ist, der Anteil dieser am Gesamtgemisch also unter 50%, 40%, 30%, 20%, 10%, 5%, 2%, 1%, 0,1% oder 0,01% liegt.

Ein an einer oder mehreren Komponenten angereichertes Gas oder Gemisch bezeichnet ein Gas bzw. Gemisch, das eine höhere Konzentration an der einen oder den mehreren Komponenten, bezogen auf ein Ausgangsgas bzw. -gemisch, aufweist. Insbesondere weist ein an einer Komponente angereichertes Gas einen im Vergleich zu dem entsprechenden Ausgangsgas mindestens 1,1-, 1,3-, 2-, 3-, 10-, 30-, 100-, 300-, oder 1000-fachen Anteil dieser Komponente auf.

Dementsprechend weist ein an einer Komponente abgereichertes Gas einen im Vergleich zu dem entsprechenden Ausgangsgas höchstens den 0,001-, 0,003-, 0,01-, 0,03-, 0,1-, 0,3-, 0,5- oder 0,9-fachen Anteil dieser Komponente auf.

Ist nachfolgend davon die Rede, dass ein Teil eines Gases oder eines Gemischs verwendet wird, kann dies entweder bedeuten, dass ein Volumenanteil des Gases oder Gemischs bis 100% des Gesamtnormvolumens des Ursprungsgases bzw. -gemischs mit derselben Zusammensetzung wie dieses verwendet wird, oder dass ein Gas bzw. Gemisch, das lediglich unter Verwendung von bestimmten Komponenten des Ursprungsgases bzw. -gemischs gebildet wurde, verwendet wird. Der Teil des Gases oder Gemischs kann also dieselbe oder eine andere Zusammensetzung wie bzw. als das Ursprungsgas bzw. -gemisch aufweisen. Ferner kann der Begriff bedeuten, dass in einem ersten Zeitraum das jeweilige Gas oder Gemisch vollständig oder zu einem höheren Anteil verwendet wird, in einem zweiten Zeitraum jedoch nicht oder in einem geringeren Anteil verwendet wird. Somit ergibt sich eine teilweise Verwendung in dem Sinne, dass im zeitlichen Mittel weder 100% noch 0% des Gases bzw. Gemischs verwendet werden, sondern ein Anteil, der zwischen diesen Extremen liegt.

Ein erfindungsgemäßes Verfahren zur elektrolytischen Herstellung eines Flüssigwasserstoffprodukts, bei dem ein Wasser enthaltender Einsatz unter Erhalt eines an Sauerstoff reichen und Wasserstoff enthaltenden Anodenrohgases und eines an Sauerstoff armen und an Wasserstoff reichen Kathodenrohgases einer Elektrolyse unterworfen wird, wobei das Kathodenrohgas stromab der Elektrolyse einer Aufreinigung, einer Verdichtung und einer Verflüssigung unterworfen wird, wobei das Kathodenrohgas stromab der Elektrolyse und stromauf der Verflüssigung zumindest teilweise einer Zwischenspeicherung unterworfen wird, ist dadurch gekennzeichnet, dass die Elektrolyse auf zwei unterschiedlichen Druckniveaus durchgeführt wird und das Kathodenrohgas der Elektrolyse, die bei einem höheren Druckniveau durchgeführt wird, zumindest teilweise der Zwischenspeicherung unterworfen wird und das Kathodenrohgas der Elektrolyse, die auf einem niedrigeren Druckniveau durchgeführt wird, nicht der Zwischenspeicherung unterworfen wird. Dadurch können die verschiedenen Dynamiken von Elektrolyse und Verflüssigung miteinander in Einklang gebracht werden, so dass das Verfahren auch bei starken Schwankungen der Elektrolyseleistung weitestgehend kontinuierlich durchgeführt werden kann.

Durch die parallele Durchführung verschiedener Elektrolysen auf unterschiedlichen Druckniveaus kann dabei die Speicherung ohne Zwischenverdichtung erfolgen, während für die nachfolgende Verflüssigung, die in solchen Fällen vorteilhafterweise auf einem Eingangs-Druckniveau arbeitet, das unterhalb des niedrigeren Elektrolysedruckniveaus liegt, lediglich zwischengespeichertes Kathodenrohgas auf das niedrigere Druckniveau entspannt zu werden braucht.

Insbesondere ist die Elektrolyseleistung dynamischer veränderbar als die Verflüssigungsleistung. Beispielsweise kann die Elektrolyseleitung zwischen 10% und 100% der Nennleistung variiert werden, wobei eine Variationsrate von bis zu 10 Prozentpunkten pro Sekunde realisierbar ist. Dahingegen ist die Verflüssigungsleistung deutlich träger regulierbar. Typischerweise kann diese zwischen 30% und 100% der entsprechenden Nennleistung variiert werden, wobei Variationsraten von maximal 2 Prozentpunkten pro Minute erreichbar sind. Die beschriebenen Leitungen verstehen sich hierbei als Durchsatzleistung, beispielsweise in einer Dimension von Masse pro Zeit bzw. Volumen pro Zeit
Insbesondere erfolgt die Zwischenspeicherung bei einem Temperaturniveau in einem Bereich nahe der Umgebungstemperatur (z.B. von 250 bis 330 K, insbesondere zwischen 273K und 313 K) und einem Druckniveau in einem Bereich von 1 bis 20 MPa und/oder als Kaltgas bei einem Temperaturniveau in einem Bereich von 50 bis 100 K, insbesondere 75 K bis 100 K, und einem Druckniveau von 1bis 20 MPa, insbesondere 3 bis 10 MPa. Geeignete Materialien für einen solchen Zwischenspeicher sind beispielsweise Stahl oder kohle- bzw. glasfaserverstärkter Kunststoff (CFK/GFK), z.B. Typ 1-4 Hochdruck-Gaszylinder (sog. tube bundles). Damit kann für die jeweilige Anwendung die insgesamt geeignetste Speicherung ausgewählt werden. Typischerweise wird der Wasserstoff aus der Elektrolyse mit einem Druck von bis zu 3 MPa erzeugt. Für die Zwischenspeicherung bei Drücken zwischen 1 und 20 MPa können ein oder mehrere Wasserstoffverdichter stromaufwärts der Speicherbehälter vorgesehen werden, z.B. Turboverdichter, Verdrängungsmaschinen (Hubkolbenverdichter, Membranverdichter, lonische Verdichter), Schraubverdichter oder Elektrochemische Verdichter. Beispielsweise kann hierbei berücksichtigt werden, dass die Speicherung auf dem niedrigeren Temperaturniveau durch die höhere Dichte des Wasserstoffs bei diesen Bedingungen deutlich kleinere Speichervolumina bei gleicher Speicherkapazität ermöglicht. Eine Speicherung auf dem höheren Temperaturniveau hat hingegen den Vorteil, dass dabei weniger Kühlenergie verloren geht, da während der Speicherung von bereits vorgekühltem Wasserstoff ein geringer Wärmeeintrag nicht ausgeschlossen werden kann, was bei einer Speicherung bei im Wesentlichen Umgebungstemperatur deutlich weniger relevant ist. Eine Speicherung in Form eines Metallhydrids oder mittels flüssiger organischer Wasserstoffträger (englisch: liquid organic hydrogen carriers, LOHC) bietet ggf. ebenfalls Volumenvorteile bei höherem Investitionsaufwand.

Dabei kann die Zwischenspeicherung stromauf und/oder stromab der Aufreinigung durchgeführt werden, wobei stromauf der Aufreinigung insbesondere eine Speicherung auf dem höheren Temperaturniveau, stromab der Aufreinigung insbesondere eine Speicherung auf dem niedrigeren Temperaturniveau vorteilhaft ist. Auch eine Kombination aus beiden kann Vorteile bieten, da so auch die Dynamik der Aufreinigung berücksichtigt bzw. kompensiert werden kann.

Die Aufreinigung kann zumindest eines aus der Gruppe aus einer katalytischen Umsetzung von Sauerstoff zu Wasser, einer Adsorption, einer destillativen Auftrennung und einer Wäsche mit einem Absorptionsfluid umfassen. Dies sind besonders effektive Möglichkeiten, relevante Verunreinigungen aus einem überwiegend aus Wasserstoff bestehenden Strom zu entfernen.

Die Elektrolyse wird vorteilhafterweise in Abhängigkeit von einem externen Energieangebot betrieben, so dass bei hohem Angebot eine hohe Elektrolyseleistung eingestellt wird und bei einem niedrigen Angebot eine niedrige Elektrolyseleistung eingestellt wird. So kann flexibel das schwankende Energieangebot genutzt werden. Es versteht sich, dass dabei die Verflüssigungsleistung aufgrund des zwischengespeicherten Anodenrohgases nicht oder nur in geringerem Maße gedrosselt zu werden braucht.

Dabei werden die niedrige Elektrolyseleistung und/oder eine niedrige Verflüssigungsleistung in einigen Ausgestaltungen unter Verwendung von der Zwischenspeicherung unterworfenem und/oder der Verflüssigung unterworfenem Wasserstoff aufrechterhalten. Dies ist insbesondere vorteilhaft, wenn das externe Energieangebot nicht ausreicht, um die Elektrolyse bzw. Verflüssigung auf einem Mindestmaß, das insbesondere einem unteren Leistungslimit entspricht, zu betreiben. Durch die Verwendung von lokal durch die Elektrolyse erzeugtem Wasserstoff kann jedoch die schnelle Einsatzbereitschaft der Elektrolyse gewährleistet werden, da damit kein "Kaltstart" erforderlich ist, der eine deutlich geringere Dynamik aufwiese. Insbesondere kann somit bei nur kurzfristigem Angebotseinbruch die Elektrolyse so betrieben werden, dass sie schnell wieder in der Leistung gesteigert werden kann, sobald das externe Energieangebot dies wieder zulässt.

Insbesondere wird die Verflüssigung unter Verwendung des zwischengespeicherten Wasserstoffs aufrechterhalten (bzw. langsam in der Last verfahren). Die Elektrolyse kann schneller in der Last variiert werden (beispielsweise mit Laständerungsraten von über 1%/min, über 0,1%/s oder über 1%/s, jeweils bezogen auf eine Maximalleistung der Elektrolyse), der Verflüssiger schlechter bzw. langsamer (z.B. mit einer Rate von weniger als 5%/min oder weniger als 2%/min, jeweils bezogen auf eine Maximalleistung der Verflüssigung). Die schnellere Laständerung der Elektrolyse geht dabei in beide Richtungen:
Bei hohem Angebot an Strom kann die Elektrolyse schnell hochgefahren und Wasserstoff zwischengespeichert werden, wobei die Verflüssigung weniger dynamisch an das variable Angebot angepasst wird.

Bei geringem Angebot an Strom kann die Elektrolyse schnell abgeregelt werden und zwischengespeicherter Wasserstoff für die Verflüssigung verwendet werden, damit diese (je nach Speicherfüllstand) langsamer runtergefahren oder aufrechterhalten werden kann.

Eine erfindungsgemäße Anlage zur Herstellung eines Flüssigwasserstoffprodukts, die von den in Bezug auf das Verfahren erläuterten Vorteilen sinngemäß entsprechend profitiert, umfasst eine Elektrolyseeinheit mit zumindest einem Elektrolyseur für die Elektrolyse eines Wasser enthaltenden Einsatzes, eine Aufreinigungseinheit, die dazu eingerichtet ist, ein in der Elektrolyseeinheit erzeugtes Kathodenrohgas an Wasserstoff anzureichern und an anderen Komponenten zumindest teilweise abzureichern, eine Verflüssigungseinheit, die zur Verflüssigung eines an Wasserstoff reichen Gasstroms eingerichtet ist und einen Zwischenspeicher, der stromab der Elektrolyseeinheit und stromauf der Verflüssigungseinheit angeordnet und dazu eingerichtet ist, zumindest einen Teil des in der Elektrolyseeinheit erzeugten Kathodenrohgases zu speichern, dadurch gekennzeichnet, dass die Elektrolyseeinheit zur Erzeugung von Kathodenrohgas auf zwei unterschiedlichen Druckniveaus eingerichtet und mit dem Zwischenspeicher derart verbunden ist, dass lediglich das auf einem höheren Druckniveau erhältliche Kathodenrohgas zumindest teilweise dem Zwischenspeicher zuführbar ist.

Optional kann die Anlage zusätzlich (insbesondere stromauf des Zwischenspeichers) einen oder mehrere Verdichter umfassen, um die Dichte des Wasserstoffs zu erhöhen.

Die Anlage umfasst Mittel, die die Anlage zur Durchführung eines wie vorstehend beschriebenen Verfahrens ertüchtigen.

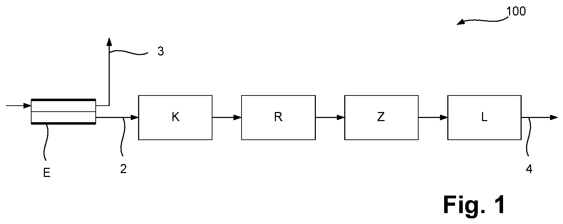

Im Folgenden werden weitere Merkmale und Vorteile der Erfindung bzw. vorteilhafter Ausgestaltungen derselben unter Verweis auf die beigefügte Zeichnung näher erläutert, wobei
Fig. 1 eine vorteilhafte Ausgestaltung erfindungsgemäßer Konzepte in vereinfachter Darstellung veranschaulicht.

Wie eingangs bereits erläutert, betrifft die Erfindung sowohl ein Verfahren als auch eine Anlage zur elektrochemischen Herstellung eines Flüssigwasserstoffprodukts. Die schematische Darstellung in Figur 1 kann dabei sowohl als Anlage als auch als Flussdiagramm eines Verfahrens interpretiert werden. Wird daher im Folgenden eine Anlagenkomponente beschrieben, gelten die Ausführungen auch sinngemäß für einen in dieser Anlagenkomponente durchgeführten Verfahrensschritt und umgekehrt. Daher werden im Folgenden auch die Bezugszeichen entsprechend verwendet, um Verfahrensschritte zu bezeichnen, die in entsprechenden Anlagenteilen durchgeführt werden und umgekehrt.

In Figur 1 ist eine vorteilhafte Ausgestaltung der Erfindung schematisch dargestellt und insgesamt mit 100 bezeichnet.

Eine Anlage 100 umfasst eine Elektrolyseeinheit E, eine Kühl- und oder Kompressionseinheit K, eine Aufreinigungseinheit R, einen Zwischenspeicher Z sowie eine Verflüssigungseinheit L.

Solch eine Anlage 100 kann auch in einen oder mehrere Container, wie sie üblicherweise zu Transportzwecken auf dem Land- und Seeweg verwendet werden, integriert werden, die so sehr schnell und kostengünstig transportiert sowie aufgestellt werden können.

Dementsprechend umfasst das Verfahren einen Elektrolyseschritt E, einen Kühl- und/oder Komprimierschritt K, einen Aufreinigungsschritt R, eine Zwischenspeicherung Z und einen Verflüssigungsschritt L.

In der Elektrolyse E wird ein Wasser enthaltender Einsatz 1 unter Verwendung von elektrischer Energie in ein Wasserstoff enthaltendes Kathodenrohgas 2 und ein Sauerstoff enthaltendes Anodenrohgas 3 umgesetzt. Der Einsatz 1 kann neben Wasser zusätzliche Komponenten enthalten, insbesondere Elektrolyten wie beispielsweise alkalische, saure oder neutrale Salze bzw. Ionen. Der Einsatz 1 kann insbesondere anodenseitig in die Elektrolyseeinheit E eingespeist werden.

Das Kathodenrohgas 2 wird der Elektrolyseeinheit E entnommen und einer Nachbereitung zugeführt, die in geeigneter Reihenfolge die Schritte der Kühlung und/oder Verdichtung bzw. Kompression, der Aufreinigung, der Zwischenspeicherung und der Verflüssigung umfasst. Dabei bildet die Verflüssigung jeweils den Abschluss der Nachbereitung, die übrigen Schritte können in ihrer Reihenfolge variiert werden.

Die Kühlung bzw. Verdichtung K des Kathodenrohgases 2 kann unter Verwendung einer konventionellen mechanischen Kältemaschine erfolgen, oder besonders vorteilhaft unter Verwendung von Abwärme der Elektrolyse E mittels einer Absorptionskältemaschine oder Adsorptionskältemaschine, was sich besonders vorteilhaft auf die Gesamtenergiebilanz der Anlage 100 auswirkt. Auch konventionelle mechanische Kältemaschinen können dabei Abwärme aus der Elektrolyse E nutzen, wobei diese zunächst zur Verrichtung von Volumenarbeit, z.B. durch Dampferzeugung in Kombination mit einer Turbine zur Verdichtung des Kathodenrohgases 2, verwendet werden kann.

Zur Aufreinigung R stehen verschiedene Methoden zur Verfügung, beispielsweise (insbesondere kryogene) Adsorption, oxidative Verbrennung von Sauerstoff, Kondensation von Bestandteilen mit vergleichsweise hohem Siedepunkt usw.

Der Aufreinigungsbedarf kann erheblich gesenkt werden, wenn der Einsatz 1 bereits stromauf der Elektrolyse E von Verunreinigungen befreit bzw. daran abgereichert wird. Insbesondere relevant sind in diesem Zusammenhang in dem Wasser des Einsatzes 1 gelöste Gase, beispielsweise Stickstoff, Kohlenstoffdioxid und/oder Edelgase. Diese können beispielsweise durch sogenanntes Stripping unter Verwendung des in der Elektrolyse erzeugten Anodenrohgases 3 oder andere Entgasungsstrategien wie beispielsweise eine Membranentgasung aus dem Einsatz 1 ausgetrieben oder anderweitig entfernt werden.

Die Zwischenspeicherung Z kann beispielsweise bei konstantem Volumen unter Verwendung eines Druckspeichers erfolgen, wobei der Druckspeicher auf einem Druckniveau, das einem kathodenseitigen Elektrolysedruckniveau entspricht, betrieben werden kann oder mittels eines Verdichters mit Kathodenrohgas 2, das auf einem Druckniveau oberhalb des kathodenseitigen Druckniveaus liegen kann, befüllt wird. Stromab des Speichers angeordnete Einheiten können dabei insbesondere so ausgelegt sein, dass sie mit variablen Eingangsdrücken betrieben werden können, oder es kann ein Druckregulator stromab des Zwischenspeichers Z vorgesehen sein, der für einen konstanten Druck sorgt.

Im Rahmen der Erfindung können auch Speicher mit konstantem Druck als der Zwischenspeicher Z verwendet werden. Solche Speicher weisen beispielsweise ein variables Volumen (z.B. in Form eines Stempels oder Kolbens in einem Hohlzylinder o.Ä.) auf, oder sie können den Druck durch entsprechende Steuerung der Speichertemperatur regulieren.

Ferner können Metallhydridspeicher verwendet werden, bei denen ein Metall, beispielsweise eine Palladium enthaltende Legierung, das zur Aufnahme von Wasserstoff unter Bildung eines Metallhydrids in der Lage ist. Im Falle einer Verwendung eines solchen Metallhydridspeichers kann die Freisetzung bzw. Abgabe von in dem Zwischenspeicher Z gespeichertem Wasserstoff wiederum unter Verwendung von Abwärme aus der Elektrolyse E erfolgen, mit entsprechenden energetischen Vorteilen.

Zur weiteren Steigerung der Dynamik, insbesondere im Bereich der Nachbereitung stromab der Elektrolyse E können auch die jeweiligen Komponenten in mehrfacher Ausführung parallel zueinander betrieben werden, so dass ein größerer steuerbarer Bereich zur Verfügung steht. Beispielsweise können mehrere Kompressoren und/oder Turbinen zur Verdichtung vorgesehen sein, so dass die Verflüssigungsleistung beispielsweise unter 30% der Nennleistung gesenkt werden kann, indem zumindest eine mehrfach vorhandene Komponente ganz abgeschaltet wird.

Wie eingangs erwähnt, ist es vorteilhaft, die Anlage 100 in Abhängigkeit von einem externen Energieangebot in ihrer Leistung zu steuern. Beispielsweise kann eine solche Anlage 100 mit erneuerbarer elektrischer Energie, z.B. aus einer Windfarm bzw. aus einem Windpark betrieben werden. Bei Flaute steht dementsprechend wenig oder gar kein Strom zur Verfügung, so dass die Elektrolyse in einem solchen Fall massiv gedrosselt werden kann. Für den Fall, dass keine elektrische Energie zur Verfügung steht, kann ein Teil des erzeugten Wasserstoffs, beispielsweise aus dem Zwischenspeicher Z zur Erzeugung von elektrischer Energie verwendet werden, um die Elektrolyse E auf einem minimalen Leistungsniveau, bspw. 10% der Nennleistung, weiter zu betreiben. Auch eine Verwendung von Wasserstoff, der in einem Flüssigspeicher stromab der Verflüssigung L verdampft, kommt für eine solche Verwendung in Frage. Dadurch kann eine schnellere Wiederinbetriebnahme bzw. Steigerung der Elektrolyseleistung bei steigendem externem Energieangebot, also beispielsweise stärker werdendem Wind, gewährleistet werden. Im Vergleich dazu dauert es erheblich länger eine außer Betrieb genommene Elektrolyseeinheit E wieder hochzufahren, insbesondere, da die Elektrolyseeinheit E auf eine Betriebstemperatur gebracht werden muss. Dabei kann eine solche Anlage 100 prinzipiell direkt in einer Windkraftanlage integriert werden (z.B. Offshore Windfarm), um bspw. Stromübertragungsverluste zu minimieren. Dabei kann mit der Windkraftanlage erzeugter Flüssigwasserstoff und/oder Kaltgase aus der Anlage teilweise auch zur Kühlung der Windkraftanlage (z.B. Generator) verwendet werden, z.B., um durch die Nutzung supraleitender Materialien die Stromübertragungsverluste zu minimieren.

Zur weiteren Steigerung der Energieeffizienz kann ein herkömmlicher Wärmetauscher verwendet werden, in dem der Einsatz 1 gegen der Elektrolyse E entnommenes Anodenrohgas 3 und/oder Kathodenrohgas 2 erwärmt wird.

Das Anodenrohgas 3 kann ebenfalls einer Verwertung zugeführt werden, so dass auch hier Schritte der Reinigung, Trocknung, Verdichtung, Verflüssigung und/oder Speicherung vorgesehen sein können. Alternativ kann das Anodenrohgas an die umgebende Atmosphäre abgegeben werden, da es prinzipbedingt keine schädlichen Komponenten enthält und somit gesundheitlich und umweltschutztechnisch unbedenklich ist.

## Patentansprüche

1. Verfahren (100) zur elektrolytischen Herstellung eines Flüssigwasserstoffprodukts (4), bei dem ein Wasser enthaltender Einsatz unter Erhalt eines an Sauerstoff reichen und Wasserstoff enthaltenden Anodenrohgases (3) und eines an Sauerstoff armen und an Wasserstoff reichen Kathodenrohgases (2) einer Elektrolyse (E) unterworfen wird, wobei das Kathodenrohgas (2) stromab der Elektrolyse (E) einer Aufreinigung (R), einer Verdichtung (K) und einer Verflüssigung (L) unterworfen wird, wobei das Kathodenrohgas (2) stromab der Elektrolyse (E) und stromauf der Verflüssigung (L) zumindest teilweise einer Zwischenspeicherung (Z) unterworfen wird, **dadurch gekennzeichnet, dass** die Elektrolyse (E) auf zwei unterschiedlichen Druckniveaus durchgeführt wird und das Kathodenrohgas (2) der Elektrolyse (E), die bei einem höheren Druckniveau durchgeführt wird, zumindest teilweise der Zwischenspeicherung (Z) unterworfen wird und das Kathodenrohgas (2) der Elektrolyse (E), die auf einem niedrigeren Druckniveau durchgeführt wird, nicht der Zwischenspeicherung (Z) unterworfen wird.

2. Verfahren (100) nach Anspruch 1, wobei die Zwischenspeicherung (Z) bei einem Temperaturniveau in einem Bereich von 250 bis 330 K, insbesondere 273 bis 313 K, und einem Druckniveau in einem Bereich von 1 bis 20 MPa oder bei einem Temperaturniveau in einem Bereich von 50 bis 100 K, insbesondere 75 bis 100 K, und einem Druckniveau von 1 bis 20 MPa, insbesondere 3 bis 10 MPa, erfolgt.

3. Verfahren (100) nach Anspruch 1 oder 2, wobei die Zwischenspeicherung (Z) stromauf der Aufreinigung (R) durchgeführt wird.

4. Verfahren (100) nach Anspruch 1 oder 2, wobei die Zwischenspeicherung (Z) stromab der Aufreinigung (R) durchgeführt wird.

5. Verfahren (100) nach Anspruch 1 oder 2, wobei die Zwischenspeicherung (Z) stromauf und stromab der Aufreinigung (R) durchgeführt wird.

6. Verfahren (100) nach einem der vorstehenden Ansprüche, wobei das Kathodenrohgas (2) stromauf der Zwischenspeicherung (Z) einer Verdichtung unterworfen wird.

7. Verfahren (100) nach einem der vorstehenden Ansprüche, wobei die Aufreinigung (R) zumindest eine katalytische Umsetzung von Sauerstoff zu Wasser oder eine Adsorption oder eine destillative Auftrennung oder eine Wäsche mit einem Absorptionsfluid umfasst.

8. Verfahren (100) nach einem der vorstehenden Ansprüche, wobei die Elektrolyse (E) in Abhängigkeit von einem externen Energieangebot betrieben wird, so dass bei hohem Angebot eine hohe Elektrolyseleistung und bei einem niedrigen Angebot eine niedrige Elektrolyseleistung eingestellt wird.

9. Verfahren (100) nach Anspruch 8, wobei die Elektrolyseleistung mit einer jeweils auf eine Maximalleistung der Elektrolyse bezogenen Änderungsrate von mehr als 1%/min, insbesondere mehr als 0,1%/s, besonders bevorzugt mehr als 1%/s, an das externe Energieangebot angepasst wird und/oder eine Verflüssigungsleistung langsamer als die Elektrolyseleistung, mit einer jeweils auf eine Maximalleistung der Verflüssigung bezogenen Rate von weniger als 5%/min, insbesondere weniger als 2%/min, an das externe Energieangebot angepasst wird.

10. Anlage zur Herstellung eines Flüssigwasserstoffprodukts (4), umfassend:
eine Elektrolyseeinheit mit zumindest einem Elektrolyseur für die Elektrolyse eines Wasser enthaltenden Einsatzes, eine Aufreinigungseinheit, die dazu eingerichtet ist, ein in der Elektrolyseeinheit erzeugtes Kathodenrohgas (2) an Wasserstoff anzureichern und an anderen Komponenten zumindest teilweise abzureichern, eine Verflüssigungseinheit, die zur Verflüssigung (L) eines an Wasserstoff reichen Gasstroms eingerichtet ist und einen Zwischenspeicher, der stromab der Elektrolyseeinheit und stromauf der Verflüssigungseinheit angeordnet und dazu eingerichtet ist, zumindest einen Teil des in der Elektrolyseeinheit erzeugten Kathodenrohgases (2) zu speichern, **dadurch gekennzeichnet, dass** die Elektrolyseeinheit zur Erzeugung von Kathodenrohgas (2) auf zwei unterschiedlichen Druckniveaus eingerichtet und mit dem Zwischenspeicher derart verbunden ist, dass lediglich das auf einem höheren Druckniveau erhältliche Kathodenrohgas (2) zumindest teilweise dem Zwischenspeicher zuführbar ist.

## Claims

1. A method (100) for the electrolytic production of a liquid hydrogen product (4) in which a water-containing feed is subjected to electrolysis (E) to obtain an oxygen-rich and hydrogen-containing anode raw gas (3) and an oxygen-poor and hydrogen-rich cathode raw gas (2), wherein the cathode raw gas (2) is subjected downstream of the electrolysis (E) to purification (R), compression (K), and liquefaction (L), wherein the cathode raw gas (2) is at least partially subjected to an intermediate storage (Z) downstream of the electrolysis (E) and upstream of the liquefaction (L), **characterized in that** the electrolysis (E) is carried out at two different pressure levels, and the cathode raw gas (2) of the electrolysis (E) which is carried out at a higher pressure level is at least partially subjected to the intermediate storage (Z), and the cathode raw gas (2) of the electrolysis (E) which is carried out at a lower pressure level is not subjected to the intermediate storage (Z).

2. The method (100) according to claim 1, wherein the intermediate storage (Z) takes place at a temperature level in a range of 250 to 330 K, in particular 273 to 313 K, and a pressure level in a range of 1 to 20 MPa or at a temperature level in a range of 50 to 100 K, in particular 75 to 100 K, and a pressure level of 1 to 20 MPa, in particular 3 to 10 MPa.

3. The method (100) according to claim 1 or 2, wherein the intermediate storage (Z) is carried out upstream of the purification (R).

4. The method (100) according to claim 1 or 2, wherein the intermediate storage (Z) is carried out downstream of the purification (R).

5. The method (100) according to claim 1 or 2, wherein the intermediate storage (Z) is carried out upstream and downstream of the purification (R).

6. The method (100) according to any of the preceding claims, wherein the cathode raw gas (2) is subjected to compression upstream of the intermediate storage (Z).

7. The method (100) according to any of the preceding claims, wherein the purification (R) comprises at least a catalytic conversion of oxygen to water or an adsorption or a distillative separation or a washing with an absorption fluid.

8. The method (100) according to any of the preceding claims, wherein the electrolysis (E) is operated depending upon an external energy supply, such that high electrolysis power is set when the supply is high, and low electrolysis power is set when the supply is low.

9. The method (100) according to claim 8, wherein the electrolysis power is adapted to the external energy supply at a rate of change of more than 1%/min, in particular more than 0.1%/s, particularly preferably more than 1%/s, based upon a maximum electrolysis power, and/or a liquefaction power is adapted to the external energy supply more slowly than the electrolysis power, at a rate of less than 5%/min, in particular less than 2%/min, based upon a maximum liquefaction power.

10. A system for the production of a liquid hydrogen product (4), comprising:
an electrolysis unit with at least one electrolyzer for the electrolysis of a water-containing feed, a purification unit that is configured to enrich a cathode raw gas (2), generated in the electrolysis unit, with hydrogen and to at least partially deplete it of other components, a liquefaction unit that is configured to liquefy (L) a hydrogen-rich gas stream, and an intermediate storage means that is arranged downstream of the electrolysis unit and upstream of the liquefaction unit and configured to store at least a part of the cathode raw gas (2) generated in the electrolysis unit, **characterized in that** the electrolysis unit is configured for the production of cathode raw gas (2) at two different pressure levels and is connected to the intermediate storage means in such a way that only the cathode raw gas (2) available at a higher pressure level can be supplied at least partially to the intermediate storage means.

## Revendications

1. Procédé (100) pour la production électrolytique d'un produit d'hydrogène liquide (4), dans lequel une charge contenant de l'eau est soumise à une électrolyse (E) pour obtenir un gaz brut anodique (3) riche en oxygène et contenant de l'hydrogène et un gaz brut cathodique (2) pauvre en oxygène et riche en hydrogène, dans lequel le gaz brut cathodique (2) est soumis en aval de l'électrolyse (E) à une purification (R), à une compression (K) et à une liquéfaction (L), dans lequel le gaz brut cathodique (2) est soumis au moins partiellement à une accumulation intermédiaire (Z) en aval de l'électrolyse (E) et en amont de la liquéfaction (L), **caractérisé en ce que** l'électrolyse (E) est effectuée à deux niveaux de pression différents et le gaz brut cathodique (2) de l'électrolyse (E), laquelle est réalisée à un niveau de pression plus élevé, est soumis au moins partiellement à l'accumulation intermédiaire (Z) et le gaz brut cathodique (2) de l'électrolyse (E), laquelle est réalisée à un niveau de pression plus bas, n'est pas soumis à l'accumulation intermédiaire (Z).

2. Procédé (100) selon la revendication 1, dans lequel l'accumulation intermédiaire (Z) est effectuée à un niveau de température compris dans une plage allant de 250 à 330 K, en particulier de 273 à 313 K, et à un niveau de pression compris dans une plage allant de 1 à 20 MPa, ou à un niveau de température compris dans une plage allant de 50 à 100 K, en particulier de 75 à 100 K, et à un niveau de pression allant de 1 à 20 MPa, en particulier de 3 à 10 MPa.

3. Procédé (100) selon la revendication 1 ou 2, dans lequel l'accumulation intermédiaire (Z) est réalisée en amont de la purification (R).

4. Procédé (100) selon la revendication 1 ou 2, dans lequel l'accumulation intermédiaire (Z) est réalisée en aval de la purification (R).

5. Procédé (100) selon la revendication 1 ou 2, dans lequel l'accumulation intermédiaire (Z) est réalisée en amont et en aval de la purification (R).

6. Procédé (100) selon l'une des revendications précédentes, dans lequel le gaz brut cathodique (2) est soumis à une compression en amont de l'accumulation intermédiaire (Z).

7. Procédé (100) selon l'une des revendications précédentes, dans lequel la purification (R) comprend au moins une conversion catalytique de l'oxygène en eau ou une adsorption ou une séparation par distillation ou un lavage avec un fluide d'absorption.

8. Procédé (100) selon l'une des revendications précédentes, dans lequel l'électrolyse (E) fonctionne en fonction d'une alimentation en énergie externe, de sorte qu'une puissance d'électrolyse élevée est réglée lorsque l'alimentation est élevée et qu'une puissance d'électrolyse faible est réglée lorsque l'alimentation est faible.

9. Procédé (100) selon la revendication 8, dans lequel la puissance d'électrolyse est adaptée à l'alimentation en énergie externe à un taux de variation supérieur à 1 %/min, en particulier supérieur à 0,1 %/s, de manière particulièrement préférée supérieur à 1 %/s, respectivement par rapport à une puissance maximale de l'électrolyse, et/ou une puissance de liquéfaction est adaptée à l'alimentation en énergie externe plus lentement que la puissance d'électrolyse, à un taux inférieur à 5 %/min, en particulier inférieur à 2 %/min, respectivement par rapport à une puissance maximale de la liquéfaction.

10. Installation pour la production d'un produit d'hydrogène liquide (4), comprenant :
une unité d'électrolyse comportant au moins un électrolyseur pour l'électrolyse d'une charge contenant de l'eau, une unité de purification qui est conçue pour enrichir en hydrogène un gaz brut cathodique (2) produit dans l'unité d'électrolyse et pour l'appauvrir au moins partiellement en d'autres composants, une unité de liquéfaction qui est conçue pour liquéfier (L) un flux de gaz riche en hydrogène, et un accumulateur intermédiaire qui est disposé en aval de l'unité d'électrolyse et en amont de l'unité de liquéfaction et qui est conçu pour accumuler au moins une partie du gaz brut cathodique (2) produit dans l'unité d'électrolyse, **caractérisée en ce que** l'unité d'électrolyse est conçue pour produire du gaz brut cathodique (2) à deux niveaux de pression différents et est reliée à l'accumulateur intermédiaire de telle sorte que seul le gaz brut cathodique (2) pouvant être obtenu à un niveau de pression plus élevé peut être amené au moins partiellement à l'accumulateur intermédiaire.
